# EUROPÄISCHE PATENTANMELDUNG

(11) **EP 3 121 295 A1**
(43) Veröffentlichungstag der Anmeldung: **25.01.2017**
(21) Anmeldenummer: 15002178.0
(22) Anmeldetag: 23.07.2015
(51) Int. Cl.: C22B 3/08, C22B 3/22, C22B 34/12, C22B 3/44

(54) **VERFAHREN ZUR REDUKTION VON DREIWERTIGEM EISEN BEI DER HERSTELLUNG VON TITANDIOXID IM SULFATVERFAHREN**

(71) Anmelder: Kronos International, Inc., 51373 Leverkusen (DE)
(72) Erfinder: Klauset, Jan, 1712 Gralum (NO); Oystein, Ruud, 1615 Fredrikstad (NO); Dahl, Asbjorn, 1778 Halden (NO); Medved, Mitja, 51375 Leverkusen (DE); Thoen, Per, 1639 Gamle fredrikstad (NO); Pierau, Thomas, 51371 Leverkusen (DE)

(57) **Zusammenfassung**

Die Erfindung betrifft den Verfahrensschritt der Reduktion von dreiwertigem Eisen bei der Herstellung von Titandioxid im Sulfatverfahren. Erfindungsgemäß findet die Reduktion nach Abtrennung des schwerlöslichen Aufschlussrückstands unter Einsatz von metallischem Eisen so statt, dass das dreiwertige Eisen vollständig zu zweiwertigem Eisen und vierwertiges Titan teilweise zu dreiwertigem Titan reduziert wird. Bevorzugt wird ein Ti(III)-Gehalt von 1 Gew.-% bis 5 Gew.-% bezogen auf Gesamt-Titan angestrebt.

Bevorzugt findet der erfindungsgemäße Verfahrensschritt im kontinuierlichen Betrieb bei einer Temperatur von >50°C bis <85°C in einem Reduktionsreaktor statt, wobei der Fortschritt der Reduktion mit Hilfe des Redoxpotentials oder des Eisen(III)- bzw. Titan (III)-Gehalts der Lösung überwacht wird.

Das erfindungsgemäße Verfahren zeichnet sich durch folgende Vorteile aus: es kann weitestgehend automatisiert werden, die Reduktionsreaktion läuft gleichmäßig ab, es können unterschiedliche Schrottqualitäten eingesetzt werden, es wird eine verbesserte TiO₂-Produktqualität erzielt.

## Beschreibung

### Gebiet der Erfindung

Die Erfindung richtet sich auf die Reduktion von dreiwertigem Eisen bei der Herstellung von Titandioxid im Sulfatverfahren.

### Technologischer Hintergrund der Erfindung

Das sogenannte Sulfatverfahren zur Herstellung von Titandioxid beruht auf dem Aufschluss von Eisen-Titan-Rohstoffen in Schwefelsäure, wobei sich nach der Zugabe von verdünnter Schwefelsäure zu dem festen Aufschlusskuchen eine Aufschluss-Suspension bildet, die gelöstes Eisen(II)sulfat- und Titanylsulfat sowie einen schwerlöslichen Aufschlussrückstand enthält. Nach der Abtrennung des Aufschlussrückstands aus der Aufschluss-Suspension wird eine Aufschlusslösung gebildet, aus der nachfolgend das gelöste Eisen(11)sulfat auskristallisiert und ebenfalls abgetrennt wird. Anschließend wird das gelöste Titanylsulfat hydrolysiert und das gebildete Titanoxidhydrat zum Endprodukt Titandioxid kalziniert.

Die üblicherweise eingesetzten Rohstoffe wie Ilmeniterz oder Eisen-Titan-Schlacken enthalten oft größere Mengen an dreiwertigem Eisen, meist in Form der Minerale Hämatit und Magnetit. Im Gegensatz zu zweiwertigem Eisen in Form von FeSO₄ hat das gelöste dreiwertige Eisen in Form von Fe₂(SO₄)₃ in der Aufschlusslösung negativen Einfluss auf die Zwischenprodukte und auf das Titandioxid-Endprodukt. Eisen(III)sulfat hat zudem im Gegensatz zu Eisen(II)sulfat eine sehr hohe Löslichkeit in der Aufschluss-Suspension sowie in der Aufschlusslösung, wodurch die Abtrennung nicht möglich ist und in den nachfolgenden Verfahrensschritten Probleme bereitet. Beispielsweise wird dreiwertiges Eisen in der nachfolgenden Hydrolysestufe auf der großen spezifischen Oberfläche des gefällten Titanoxidhydrats adsorbiert und führt zu unerwünschten Verfärbungen im Endprodukt. In dem bekannten Sulfatverfahren nach dem Stand der Technik, welches ausführlich in Ullmann's Encyclopedia of Industrial Chemistry, Kapitel "Pigments, Inorganic, 2. White Pigments", (Wiley-VCH Verlag GmbH & Co. KGaA, 2011) beschrieben ist, wird deswegen während und nach der Bildung der Aufschluss-Suspension eine Reduktion von dreiwertigem zu zweiwertigem Eisen durch Zugabe von metallischem Eisen vorgenommen. Das metallische Eisen wird üblicherweise als Eisenschrott in loser Form oder in Form von gepressten Paketen mit definierter Dichte in die Aufschluss-Suspension gegeben. Die Geschwindigkeit der ablaufenden exothermen Oberflächenreaktion ist abhängig von der Oberflächenbeschaffenheit, der Dicke des eingesetzten Eisenmaterials und der Durchmischung sowie der Temperatur, die sich aus der entwickelten Reaktionswärme und Abkühleffekten im Reaktionssystem ergibt. Die Durchmischung der Suspension erfolgt währenddessen durch von unten in das Aufschlussgefäß eingeblasene Luft. Die eingeblasene Luft bewirkt jedoch eine Abkühlung der Suspension, welche zu geringeren Reaktionsgeschwindigkeiten führt, und wirkt außerdem als Oxidationsmittel für zweiwertiges Eisen und für Wasserstoff in statu nascendi, wodurch dreiwertiges Eisen bzw. Wasser erzeugt werden. Dadurch wird die Ausbeute des eingesetzten metallischen Eisens verringert, was sich auf die Wirtschaftlichkeit des Prozesses auswirkt. Der Re-Oxidation des zweiwertigen Eisens zu dreiwertigem Eisen durch die Luft während der gesamten nachfolgenden Verarbeitung der Aufschlusslösung wird üblicherweise durch eine ausreichende Menge an dreiwertigem Titan in der Aufschluss-Suspension und in der Aufschlusslösung begegnet. Das dreiwertige Titan wird aus dem vierwertigen Titan ebenfalls durch die Zugabe des metallischen Eisens erzeugt.

Die durch eingeblasene Luft bewirkte "externe" Durchmischung hat nur geringen Einfluss auf die "interne" Durchmischung der Aufschluss-Suspension innerhalb der Schrott-Schüttung oder der Schrott-Presspakete. Deswegen kann es innerhalb der Schrott-Schüttung oder der Schrott-Presspakete zu lokalen Temperaturspitzen von über 85°C kommen, die eine vorzeitige und unkontrollierte Hydrolyse des vierwertigen Titans auslösen und damit zu minderwertigem TiO₂-Endprodukt führen. Die geringe interne Durchmischung kann weiterhin Nebenreaktionen begünstigen wie die unerwünschte Entwicklung von Wasserstoff. Zudem findet infolge der langen Dauer der Reduktionsreaktion eine fortlaufende Auflösung von weiteren Inhaltsstoffen wie z.B. dreiwertiges Eisen aus den noch nicht aufgeschlossenen Rohstoffpartikeln aus dem Aufschlussrückstand statt, weswegen auch weiteres metallisches Eisen für die Reduktion zugegeben werden muss.

In dem Sulfatverfahren zur Herstellung von Titandioxid gemäß EP 2 064 355 B1 findet der Reduktionsschritt nicht in der Aufschluss-Suspension, sondern nach Abtrennung des unlöslichen Aufschlussrückstands in der Aufschlusslösung und bevorzugt vor der Eisensulfat-Kristallisation statt. Die Reduktion erfolgt durch Einleitung von SO₂-Gas, welches mit Fe(III)-Sulfat und Wasser zu Fe(II)-Sulfat und Schwefelsäure reagiert. Falls erforderlich, kann nachfolgend restliches Eisen(III) mittels metallischem Eisen (Schrott) reduziert werden. Als Zielgröße wird gemäß EP 2 064 355 B1 ein Eisen(III)-Gehalt von 0 bis 1 g/l unter Vermeidung der Bildung von dreiwertigem Titan angegeben.
Die Reduktion mit Hilfe von Eisenschrott erfolgt so, dass die Aufschlusslösung chargenweise gerührt und um ein Schrottpaket herum gepumpt wird. Der Reduktionsgrad der Lösung wird mittels Redoxpotential-Messung an der gekühlten Lösung bestimmt.

Die bekannten Verfahren zur Reduktion von dreiwertigem Eisen im Rahmen des Sulfatverfahrens zur Herstellung von Titandioxid weisen also verschiedene Nachteile auf, wie mangelhafte interne Durchmischung, die zu Temperaturspitzen und Konzentrationsgradienten führt, sowie zu geringe Ergiebigkeit (Effizienz) der eingesetzten Schrottmenge und unerwünschte Re-Oxidationsreaktionen, die zu erhöhtem Schrottverbrauch und erhöhtem Anfall an Eisensulfat führen.

### Aufgabenstellung und Kurzbeschreibung der Erfindung

Der Erfindung liegt die Aufgabe zugrunde, ein Verfahren zur Reduktion von dreiwertigem Eisen im Rahmen des Sulfatverfahrens zur Herstellung von Titandioxid anzugeben, das die Nachteile des Stands der Technik überwindet.

Die Aufgabe wird gelöst durch ein Sulfatverfahren zur Herstellung von Titandioxid aus einem Eisen-Titan-Rohstoff umfassend die Verfahrensschritte:
a) Aufschluss des Eisen-Titan-Rohstoffs in Schwefelsäure und Bilden einer Aufschluss-Suspension,
b) Abtrennen des schwerlöslichen Aufschlussrückstands und Bilden einer Aufschlusslösung,
c) Reduktion von dreiwertigem Eisen in der Aufschlusslösung durch Einsatz von metallischem Eisen,
d) Kristallisation und Abtrennung von Eisen(11)sulfat aus der reduzierten Aufschlusslösung,
e) Hydrolyse und Kalzinierung des Hydrolyseprodukts, um Titandioxid herzustellen,
dadurch gekennzeichnet, dass
in Verfahrensschritt c) das dreiwertige Eisen vollständig zu zweiwertigem Eisen und vierwertiges Titan teilweise zu dreiwertigem Titan reduziert wird.

Weitere vorteilhafte Ausformungen der Erfindung sind in den Unteransprüchen angegeben.

### Figuren

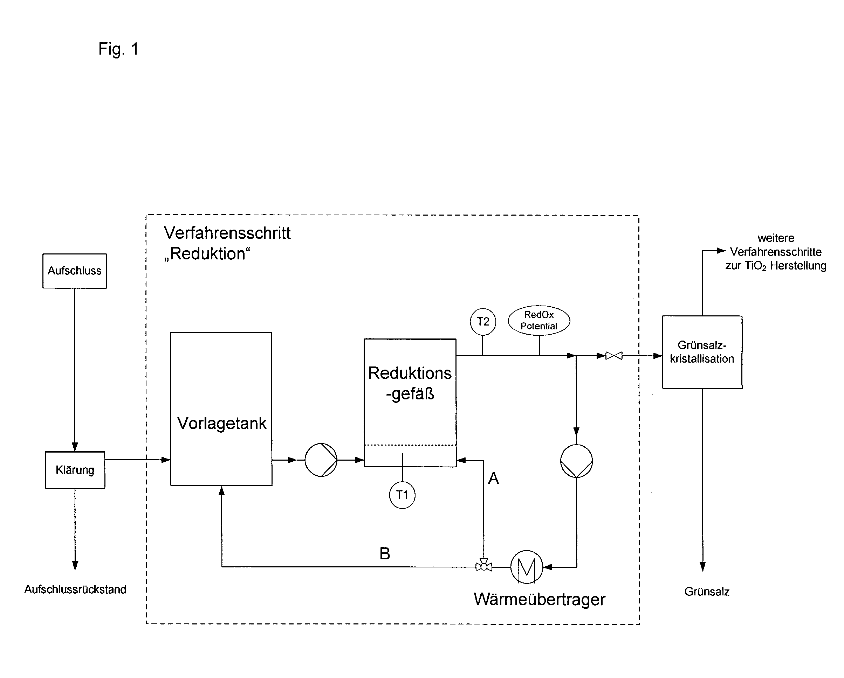

Figur 1: Schematisches Verfahrensbild des erfindungsgemäßen Verfahrens zur Reduktion von dreiwertigem Eisen

### Beschreibung der Erfindung

Alle im Folgenden offenbarten Angaben bezüglich Größe in µm usw., Konzentration in Gew.-% oder Vol.-%, Temperatur, Volumen- bzw. Massenströme, usw. sind so zu verstehen, dass alle Werte, die im Bereich der dem Fachmann bekannten jeweiligen Messgenauigkeit liegen, mit umfasst sind.

Die Erfindung geht aus von dem Stand der Technik, wie er in Ullmann's Encyclopedia of Industrial Chemistry beschrieben ist. Erfindungsgemäß wird der Reduktionsschritt jedoch erst nach der Abtrennung des Aufschlussrückstands - sogenannte "Klärung" - in der Aufschlusslösung durchgeführt. Figur 1 gibt das erfindungsgemäße Verfahren schematisch wieder.

In der Aufschlusslösung liegt das gelöste Eisen nach der Klärung und vor der Reduktion üblicherweise zu 3 Gew.-% bis 9 Gew.-% als dreiwertiges Eisen in Form von Fe₂(SO₄)₃ und zu 5 Gew.-% bis 25 Gew.-% als zweiwertiges Eisen in Form von FeSO₄ vor.

Nach der Klärung wird die Aufschlusslösung bevorzugt über einen Vorlagetank in ein Reduktionsgefäß geführt, welches mit metallischem Eisen bevorzugt in Form von Eisenschrott gefüllt ist. Der Eisenschrott liegt beispielsweise als Schüttung oder in Form gepresster Schrottpakete vor und wird im Folgenden als "Schrott" bezeichnet. Die Einleitung der Aufschlusslösung erfolgt bevorzugt von unten, wobei sich am Boden des Reduktionsgefäßes bevorzugt ein geeignetes Flüssigkeitsverteilsystem befindet wie z.B. Siebböden mit geeignetem Druckverlust oder Rohrverteilersysteme, welche aus der Extraktions- und Destillationstechnik bekannt und kommerziell erhältlich sind, über die die Aufschlusslösung gleichmäßig verteilt durch den Schrott geleitet wird.
Die Aufschlusslösung wird am anderen Ende des Reduktionsgefäßes, in diesem Fall am oberen Ende des Gefäßes z.B. als Überlauf abgezogen. Im Verlaufe des Reduktionsprozesses löst sich der Eisenschrott in der Aufschlusslösung, und neuer Schrott wird nach Bedarf nachgefüllt.
In einer besonderen Ausführung der Erfindung wird sichergestellt, dass die Menge des zur Reduktion zur Verfügung stehenden metallischen Eisens, welches permanent mit der zu reduzierenden Aufschlusslösung in Kontakt steht, auch während des fortschreitenden Schrottverbrauchs in etwa konstant bleibt. Dies kann bevorzugt dadurch erreicht werden, dass beispielsweise die Oberfläche der Aufschlusslösung im Gefäß immer unterhalb der Schrottfüllung liegt, indem der Schrott entsprechend so nachgefüllt wird, dass er aus der Aufschlusslösung herausragt. Alternativ kann auch ein definiertes Niveau der Schrottfüllung unterhalb der Oberfläche der Aufschlusslösung gehalten werden, indem der Schrott entsprechend einer geeigneten Niveaumessung nachgefüllt wird.

Die Aufschlusslösung wird bevorzugt mit Leerrohrgeschwindigkeit durch das Reduktionsgefäß gefördert, welche einer Reynolds-Zahl von mindestens 200, bevorzugt von mindestens 800 und besonders bevorzugt von mindestens 1600 entspricht.

Wie im Nachfolgenden dargestellt, kann das erfindungsgemäße Verfahren weitestgehend automatisiert und sowohl im "Batchbetrieb" wie im "kontinuierlichen Betrieb" gefahren werden.

In einer Ausführung des erfindungsgemäßen Verfahrens als "Batchbetrieb" wird die aus dem Reduktionsgefäß überlaufende Aufschlusslösung im Kreislauf über die Leitung A (s. Fig. 1) direkt zurück in das Reduktionsgefäß und teilweise oder vollständig über die Leitung B (s. Fig. 1) über den Vorlagetank zurück in das Reduktionsgefäß geführt. Dabei passiert die Aufschlusslösung einen Wärmeübertrager (Fig. 1), mit Hilfe dessen die Temperatur der Lösung im gesamten Verfahrensschritt der Reduktion auf unter 85°C eingestellt werden kann. Vorzugsweise wird die Temperatur der Lösung im gesamten Verfahrensschritt der Reduktion, insbesondere aber im Reduktionsgefäß auf einen Wert auf unterhalb 85°C und oberhalb 50°C eingestellt, so dass einerseits keine vorzeitige Hydrolyse auftritt und andererseits eine ausreichend hohe Reaktionsrate aufrechterhalten werden kann, um eine gewünschte Anlagenkapazität erreichen zu können. Hierfür findet eine automatisierte Temperaturmessung der Lösung statt, sowohl am Eintritt in das Reduktionsgefäß (T1) wie am Austritt aus dem Reduktionsgefäß (T2). Besonders bevorzugt soll die Temperatur im Reduktionsreaktor zwischen 60 °C und 70 °C liegen.
Alternativ kann der Wärmeübertrager in Leitung A und/oder in Leitung B installiert sein. Desweiteren kann der Fortschritt der Reduktionsreaktion in der aus dem Reduktionsreaktor überlaufenden Aufschlusslösung mittels Redoxpotential-Elektrode kontinuierlich bestimmt werden. Alternativ können weitere, gegebenenfalls automatisierbare Methoden aus dem Bereich der instrumentellen Analytik zur Konzentrationsbestimmung von dreiwertigen Eisen- und/oder dreiwertigen Titanverbindungen, die dem Fachmann bekannt sind, eingesetzt werden, um den Fortschritt der Reduktion zu kontrollieren. Geeignet sind beispielsweise optische, spektroskopische und elektroanalytische Bestimmungsmethoden, die kontinuierlich in-line oder diskontinuierlich off-line eingesetzt werden.
Im Folgenden soll bei dem Hinweis auf eine Redoxpotentialmessung auch jede andere Messmethode mitumfasst sein, mit der der Fortschritt der Reduktion bzw. die Konzentration an dreiwertigem Eisen und dreiwertigem Titan in der Aufschlusslösung bestimmt werden kann.

In einer bevorzugten Ausführung der Erfindung wird die vollständige Reduktion des dreiwertigen Eisens und die partielle Ti(IV)-Reduktion so durchgeführt, dass in der Aufschlusslösung ein Gehalt an dreiwertigem Titan von 1 bis 5 Gew.-%, besonders bevorzugt jedoch von 1,2 bis 2,3 Gew.-%, bezogen auf die Gesamt-Titankonzentration erzielt wird.

Im "Batchbetrieb" wird ein Batch der unreduzierten Aufschlusslösung so lange im Kreislauf durch das Reduktionsgefäß (Leitung A, s. Fig. 1) bzw. durch den Vorlagetank und das Reduktionsgefäß (Leitung B, s. Fig. 1) geführt, bis der gewünschte Redoxpotentialwert der Aufschlusslösung erreicht ist, der einer vollständigen Reduktion des dreiwertigen Eisens und einer partiellen Reduktion des vierwertigen Titans entspricht.

In einer Ausführung des erfindungsgemäßen Verfahrens als "kontinuierlicher Betrieb" wird die Zulaufmenge an unreduzierter Aufschlusslösung über die Redoxpotentialmessung gesteuert. Hierfür wird über die Messung des Redoxpotentials und/oder der Temperatur am Auslass des Reduktionsgefäßes (T2) die Zulaufmenge von unreduzierter Aufschlusslösung in das Reduktionsgefäß so reguliert, dass am Auslass des Reduktionsgefäßes der Zielwert für die Konzentration an dreiwertigem Titan in der Lösung und/oder die angestrebte Temperatur erreicht werden, ohne dass eine Kreislaufführung über die Leitung A und/oder Leitung B der Aufschlusslösung erforderlich ist. Nachdem der Zielwert für die Konzentration an dreiwertigem Titan am Auslass des Reduktionsgefäßes erreicht ist, kann die so reduzierte Aufschlusslösung an die nachfolgenden Verfahrensschritte übergeben werden.

In einer alternativen Ausführung des "kontinuierlichen Betriebs" wird die Aufschlusslösung bei einem gewählten konstanten Zulauf aus dem Vorlagetank durch das Reduktionsgefäß und über die Leitung A (s. Fig. 1) im Kreis geführt. Hierbei wird der Volumenstrom der im Kreislauf über die Leitung A geführten Lösung so reguliert, dass der gewünschte Redoxpotentialwert erreicht wird, der einer vollständigen Reduktion des dreiwertigen Eisens und einer partiellen Reduktion des vierwertigen Titans entspricht. Hierfür wird nach einer Anfahrphase, die in der Regel im Batchbetrieb durchgeführt wird, allmählich auf kontinuierlichen Betrieb umgestellt. Das bedeutet, dass die Zulaufmenge an unreduzierter Aufschlusslösung langsam von Zulaufmenge Null bis auf die gewünschte Zulaufmenge eingestellt wird. Währenddessen wird der Volumenstrom der im Kreis über die Leitung A geführten Lösung über die Redoxpotentialmessung so gesteuert, dass kontinuierlich reduzierte Aufschlusslösung im Überlauf des Reduktionsgefäßes, welche eine vollständige Reduktion des dreiwertigen Eisens und eine partielle Reduktion des vierwertigen Titans aufweist, abgezogen wird und an die nachfolgenden Verfahrensschritte übergeben werden kann.

Erfindungsgemäß lässt sich auch bei schwankenden Konzentrationen der zu reduzierenden Anteile in der geklärten Aufschlusslösung die Qualität des Überlaufs durch die Regulierung der im Kreislauf über die Leitung A geführten Menge gezielt steuern. Diese Steuerung erfolgt ebenso wie in den oben beschriebenen Ausführungsvarianten über die Messung des Redoxpotentials am Auslauf des Reduktionsgefäßes.

Das erfindungsgemäße Verfahren bietet gegenüber den Verfahren aus dem Stand der Technik mehrere Vorteile:
- Das erfindungsgemäße Verfahren kann weitestgehend automatisiert werden und im Batchwie insbesondere im kontinuierlichen Betrieb gefahren werden.
- Eine manuelle Überwachung der Schrottzugabe bzw. der Schrottnachdosierung ist nicht erforderlich, da immer eine in etwa konstante Menge metallischen Eisens für den Reduktionsvorgang zur Verfügung steht.
- Die Reduktionsreaktion kann gleichmäßig und gesteuert ablaufen, so dass ein definierter Reduktionsgrad in der Aufschlusslösung im Sinne eines Redox-Potentials, gemessen gegen ein standardisiertes Referenzpotential, erreicht werden kann.
- Probleme aufgrund der nach dem Stand der Technik durchgeführten Luftrührung bzw. internen Durchmischung wie Re-Oxidation, frühzeitige Hydrolyse, Wasserstoffbildung durch Nebenreaktionen und unkontrolliertes Abkühlen der Lösung, können durch das Verfahren vermieden werden. Dadurch wird eine verbesserte Titandioxid-Produktqualität erreicht.
- Die Temperatursteuerung erlaubt die Verwendung unterschiedlicher Schrottqualitäten, beispielsweise von sehr reaktivem dünnen Dosenblech, welches im Verfahren nach dem Stand der Technik aufgrund hoher Reaktionsgeschwindigkeit und hoher begleitender Wärmeentwicklung nicht eingesetzt werden kann.
- Insgesamt besteht ein geringerer Schrottbedarf, wodurch sich also eine höhere Effizienz des Verfahrens ergibt. Außerdem fällt in dem nachfolgenden Verfahrensschritt der GrünsalzKristallisation eine geringere Menge an kristallisiertem Eisensulfat an.
- Weitere im Aufschlussrückstand enthaltene Nebenbestandteile werden in diesem Verfahren während der Reduktion nicht herausgelöst und verbleiben wegen einer vorherigen Abtrennung im Rückstand. Hierdurch enthält die Aufschlusslösung weniger Begleitelemente, die z.B. in der nachfolgenden Kristallisation abgetrennt werden müssen und welche die Qualität des Titandioxid-Endprodukts negativ beeinflussen.

### Beispiele

Die Erfindung wird anhand der folgenden Beispiele genauer beschrieben, ohne dass dadurch der Umfang der Erfindung eingeschränkt werden soll.

### Beispiel 1: kontinuierlicher Betrieb ohne Kreislaufführung

Ein 20 m³ Reduktionsreaktor (Reduktionsgefäß) mit einer Höhe von 5 m wurde mit etwa 9 Tonnen metallischem Eisens in Form eines Gemisches aus Schrott-Presspaketen und Schrott-Schüttung so gefüllt, dass oberhalb des Überlaufes in einer Höhe von 4 m eine um 0,5 bis 1 m überstehende Schüttung gebildet wurde. In einer Anfahrprozedur wurde der Reduktionsreaktor zunächst mit der geklärten, etwa 55°C warmen unreduzierten Aufschlusslösung aus einem 200 m³ großen Vorlagetank vollständig gefüllt. Anschließend wurde die in dem Reduktionsreaktor befindliche Aufschlusslösung so lange über die Redoxpotential-Messstelle und den Wärmeübertrager im Kreislauf gefahren, bis am Überlauf eine Austrittstemperatur von 60°C und an der Redoxpotential-Elektrode eine Konzentration von 1,2 g/L dreiwertigem Titan (entsprechend ca. 1,5 Gew.-% dreiwertiges Titan bezogen auf Gesamt-Titangehalt) in der Lösung erreicht wurde. Der während dieser Anfahrprozedur im Kreislauf über einen Wärmeübertrager und über die Leitung A geführte Volumenstrom betrug 25 m³/h, wobei sich eine Temperaturdifferenz zwischen dem Reaktorboden und dem Reaktorausgang von etwa 3 °C einstellte. Die Leistung des Wärmeübertragers, die an die im Kreis geführte Lösung abgegeben werden konnte, betrug bis zu 500 KW und wurde je nach der gewünschten Temperatur am Reaktorausgang sowohl zur Kühlung auch auch zum Heizen automatisch abgerufen.
Anschließend wurde in den kontinuierlichen Betrieb gewechselt, indem über die Messung des Redoxpotentials im Überlauf am Reaktorauslass die Zulaufmenge aus dem Vorlagetank stufenweise so reguliert und angepasst wurde, dass eine Kreislaufführung des Volumenstroms nicht mehr erforderlich war, um den angestrebten Temperaturbereich und den angestrebten Titan(III)-Gehalt zu erreichen. Dabei ergab sich in einer kontinuierlichen Betriebsweise ein stabiler Betriebspunkt bei einem Zulaufvolumenstrom von 35 m³/h. Die Auflösungsgeschwindigkeit des metallischen Eisens lag bei den angegebenen Bedingungen bei 700 kg/h. Dieser Verbrauch führte zur vollständigen Reduktion von dreiwertigem Eisen und zu der angestrebten Konzentration an dreiwertigem Titan von 1,2 g/L in der Aufschlusslösung am Reaktorausgang. Die reduzierte Aufschlusslösung wurde anschließend den nachfolgenden Verfahrensschritten im Prozess übergeben.

### Beispiel 2: kontinuierlicher Betrieb mit Kreislaufführung

Der Reduktionsreaktor aus dem Beispiel 1 wurde nach der gleichen Anfahrprozedur, wie sie in Beispiel 1 beschrieben wurde, mit geklärter Aufschlusslösung befüllt und anschließend kontinuierlich mit einem konstanten Volumenstrom von 50 m³/h aus dem Vorlagetank gespeist. Um in der Aufschlusslösung am Reaktorausgang eine angestrebte Konzentration an dreiwertigen Titan von 1,2 g/L zu erreichen, wurde der im Kreislauf über einen Wärmeübertrager und über die Leitung A geführte Volumenstrom auf 20 m³/h eingestellt. Unter diesen Bedingungen stellte sich am Überlauf eine Austrittstemperatur von 67°C ein, wobei die Temperaturdifferenz zwischen dem Reaktorboden und dem Reaktorausgang etwa 6°C betrug. Die reduzierte Aufschlusslösung wurde den nachfolgenden Verfahrensschritten im Prozess übergeben.

### Beispiel 3: kontinuierlicher Betrieb mit Kreislaufführung

Der Reduktionsreaktor aus dem Beispiel 1 wurde nach der gleichen Anfahrprozedur, wie sie in Beispiel 1 beschrieben wurde, mit geklärter Aufschlusslösung befüllt und anschließend kontinuierlich mit einem Volumenstrom von 70 m³/h aus dem Vorlagetank gespeist. Der im Kreislauf über einen Wärmeübertrager und über die Leitung A geführte Volumenstrom wurde auf 45 m³/h eingestellt, damit sich am Überlauf eine Austrittstemperatur von 63°C einstellte. Unter diesen Bedingungen betrug die Temperaturdifferenz zwischen dem Reaktorboden und dem Reaktorausgang etwa 5°C. Die Auflösungsgeschwindigkeit des metallischen Eisens betrug etwa 1400 kg/h, was zur vollständigen Reduktion von dreiwertigem Eisen und zu der angestrebten Konzentration an dreiwertigen Titan von 1,2 g/L in der Aufschlusslösung am Reaktorausgang führte. Die reduzierte Aufschlusslösung wurde den nachfolgenden Verfahrensschritten im Prozess übergeben.

In Beispielen 1 bis 3 wurde als wichtige Sicherheitsmaßnahme die Messung von Wasserstoffkonzentration in der über dem Reaktor abgesaugten Luft vorgenommen, um damit die untere Explosionsgrenze zu überwachen. Die Absaugung erfolgte über eine am Reaktordeckel zentral angeordnete Leitung mit einem Volumenstrom von 6000 m³/h Luft, die über seitliche Öffnungen am Reaktordeckel aus der Umgebung angesaugt wurde. In allen Beispielen konnte eine Wasserstoffentwicklung nicht nachgewiesen werden. Das lässt - im Vergleich zu herkömmlichen Verfahren, wo Konzentrationen bis zu 3 Vol.-% Wasserstoff beobachtet werden - auf eine sehr gute Ausbeute der Reduktionsreaktion ohne nennenswerte Verluste durch Nebenreaktion der Wasserstoffbildung schließen.

## Patentansprüche

1. Verfahren zur Herstellung von Titandioxid aus einem Eisen-Titan-Rohstoff umfassend die Verfahrensschritte:
a) Aufschluss des Eisen-Titan-Rohstoffs in Schwefelsäure und Bilden einer Aufschluss-Suspension,
b) Abtrennen des schwerlöslichen Aufschlussrückstands und Bilden einer Aufschlusslösung,
c) Reduktion von dreiwertigem Eisen in der Aufschlusslösung durch Einsatz von metallischem Eisen,
d) Kristallisation und Abtrennung von Eisen(11)sulfat aus der reduzierten Aufschlusslösung,
e) Hydrolyse und Kalzinierung des Hydrolyseprodukts, um Titandioxid herzustellen, **dadurch gekennzeichnet, dass**
in Verfahrensschritt c) das dreiwertige Eisen vollständig zu zweiwertigem Eisen und vierwertiges Titan teilweise zu dreiwertigem Titan reduziert wird.

2. Verfahren nach Anspruch 1 **dadurch gekennzeichnet, dass**
die Reduktion in Verfahrensschritt c) in einem mit metallischen Eisen gefüllten Reduktionsgefäß stattfindet, wobei die Aufschlusslösung durch das Reduktionsgefäß gefördert wird.

3. Verfahren nach Anspruch 2 **dadurch gekennzeichnet, dass**
die Aufschlusslösung mit einer Leerrohrgeschwindigkeit durch das Reduktionsgefäß gefördert wird, welche einer Reynolds-Zahl von mindestens 200, bevorzugt von mindestens 800 und besonders bevorzugt von mindestens 1600 entspricht.

4. Verfahren nach Anspruch 2 oder 3 **dadurch gekennzeichnet, dass**
die Aufschlusslösung in das Reduktionsgefäß unten eingeleitet und oben aus dem Reduktionsgefäß abgeleitet wird.

5. Verfahren nach einem oder mehreren der Ansprüche 1 bis 4 **dadurch gekennzeichnet, dass**
die Menge des zur Reduktion zur Verfügung stehenden metallischen Eisens, welches permanent mit der zu reduzierenden Aufschlusslösung in Kontakt steht, während des fortschreitenden Eisenverbrauchs in etwa konstant bleibt.

6. Verfahren nach einem oder mehreren der Ansprüche 2 bis 5 **dadurch gekennzeichnet, dass**
die Eisenfüllung in dem Reduktionsgefäß aus der Aufschlusslösung herausragt.

7. Verfahren nach einem oder mehreren der Ansprüche 1 bis 6 **dadurch gekennzeichnet, dass**
Verfahrensschritt c) sowohl im Batchbetrieb wie im kontinuierlichen Betrieb gefahren werden kann.

8. Verfahren nach Anspruch 7 **dadurch gekennzeichnet, dass**
die Aufschlusslösung im kontinuierlichen Betrieb in einem Durchgang durch das Reduktionsgefäß gefördert wird.

9. Verfahren nach Anspruch 7 **dadurch gekennzeichnet, dass**
die Aufschlusslösung im kontinuierlichen Betrieb im Kreislauf durch das Reduktionsgefäß gefördert wird.

10. Verfahren nach einem oder mehreren der Ansprüche 1 bis 9 **dadurch gekennzeichnet, dass**
der Reduktionsfortschritt in der Aufschlusslösung über das Redoxpotential der Aufschlusslösung oder über die Konzentration an dreiwertigem Eisen und/oder dreiwertigem Titan in der Aufschlusslösung bestimmt wird.

11. Verfahren nach einem oder mehreren der Ansprüche 1 bis 10 **dadurch gekennzeichnet, dass**
in Verfahrensschritt c) die Temperatur der Aufschlusslösung in dem Reduktionsgefäß im Bereich von oberhalb 50°C bis unterhalb 85°C und bevorzugt zwischen 60°C bis 70°C liegt.

12. Verfahren nach einem oder mehreren der Ansprüche 1 bis 11 **dadurch gekennzeichnet, dass**
die Reduktion bis zu einem Gehalt an dreiwertigem Titan bezogen auf Gesamt-Titan von 1 bis 5 Gew.-% bevorzugt 1,2 bis 2,3 Gew.-% in der Aufschlusslösung durchgeführt wird.
